# EUROPÄISCHE PATENTSCHRIFT

(11) **EP 1 903 911 B1**
(45) Veröffentlichungstag und Bekanntmachung des Hinweises auf die Patenterteilung: **14.03.2012**
(21) Anmeldenummer: 06777642.7
(22) Anmeldetag: 07.07.2006
(51) Int. Cl.: A47C 1/026, B60N 2/22

(54) **RASTBESCHLAG**
CATCH FITTING
FERRURE A CRAN D'ARRET

(30) Priorität: 20.07.2005 DE 202005011386 U
(43) Veröffentlichungstag der Anmeldung: 02.04.2008
(73) Patentinhaber: Kintec Solution GmbH, 33397 Rietberg (DE)
(72) Erfinder: MACKERT, Michael, 59602 Rüthen (DE)
(74) Vertreter: Moser & Götze
(86) Internationale Anmeldenummer: PCT/EP2006/064010
(87) Internationale Veröffentlichungsnummer: WO 2007/009893

(56) Entgegenhaltungen:
- DE-U1- 9 105 323
- DE-U1-202005 003 960
- FR-A1- 2 737 263

## Beschreibung

Die vorliegende Erfindung betrifft einen Rastbeschlag eines verstellbaren Lehnen- oder Stützteiles eines Möbels, insbesondere eines Sitz- oder Liegemöbels, mit einer Anschlusslasche und einer damit schwenkbar verbundenen, in verschiedenen Winkelstellungen arretierbaren Rastlasche, die eine konzentrisch zur Gelenkachse angeordnete Verzahnung aufweist, in die in Raststellung eine drehbar an der Anschlusslasche gelagerte Sperrklinke eingreift, wobei die Sperrklinke in der ausgerückten Position durch eine Feder gehalten und in der eingerückten Position von derselben Feder beaufschlagt wird.

Solche Rastbeschläge werden üblicherweise im Seitenbereich von Möbeln, insbesondere Sitz- oder Liegemöbel angeordnet, wo sie möglichst wenig Raum beanspruchen sollen, so dass sie nicht als optisch störend empfunden werden.

Daneben müssen die Rastbeschläge gewisse Haltekräfte aufweisen. So sieht die Landesgewerbeanstalt (LGA) eine sichere Funktion von Rastbeschlägen ab einer Haltekraft von 180 Nm als gegeben an. Daher müssen aufgrund der auftretenden Beanspruchungen die Rastzähne und die Außenverzahnung der Rastbeschläge sowie die Rastklinke so dimensioniert und ausgestaltet sein, dass entsprechende Haltekräfte erreicht werden.

Zusätzlich sollten die Rastbeschläge eine Mehrzahl von Rasteinstellungen aufweisen, wozu die Verzahnung eine entsprechende Anzahl von Zähnen aufweisen muss.

Insbesondere bei schlanken schmalen Möbeln mit einem Metallgestell oder Rahmen, wie z. B. Sitz- und Liegemöbel, treten Probleme beim Einsatz üblicher Rastbeschläge auf.

So ist aus der DE 91 05 323 U1 ein Rastbeschlag bekannt, bei dem die Außenverzahnung zwischen einem Anschlagnocken einerseits rund einer Drucknase andererseits angeordnet ist, so dass der gesamte Wirkbereich, der mit der Sperrklinke in Funktion bringbar ist, von dem Anschlagnocken einerseits und der Drucknase andererseits begrenzt wird. Bei diesem Rastbeschlag stehen die Drucknase einerseits und der Anschlagnocken andererseits jeweils seitlich nach außen hervor, so dass der Rastbeschlag im Bereich des Gelenkes selbst ein relativ großes Baumaß aufweist.

Aus der DE 20 2005 003 960 U1 ist zwar ein Rastbeschlag bekannt, bei dem die Drucknase zwischen dem Anschlagnocken und der Außenverzahnung angeordnet ist, so dass diese nicht mehr außen vorsteht und die Rastlasche insgesamt im Bereich der Außenverzahnung schmaler gehalten werden kann. Dieser Rastbeschlag weist jedoch aufgrund der verwendeten Geometrie immer noch ein relativ großes Baumaß auf. Ferner wird die Größe des Bereichs der Verzahnung durch die Anordnung der Drucknase verkleinert, so dass der entsprechende rastende Schwenkbereich verkleinert wird, da die Anzahl der Zähne verkleinert ist.

Aufgabe der Erfindung ist es, einen Rastbeschlag zur Verfügung zu stellen, bei dem das Baumaß möglichst klein ist. Daneben soll der Rastbeschlag auch eine große Haltekraft und gleichzeitig einen möglichst großen rastenden Verstellbereich aufweisen. Insbesondere soll der Rastbeschlag zudem so klein bauend sein, dass sein Einsatz in Sitz- und Liegemöbel ohne Probleme möglich ist.

Diese Aufgabe wird durch den in Anspruch 1 wiedergegebenen Rastbeschlag gelöst.

Dadurch, dass wobei lediglich ein Anschlagnocken an der Rastlasche zum Ausrücken der Sperrklinke durch Zusammenwirken mit einer Ausrücknase vorgesehen ist und die Sperrklinke eine Einrückfläche aufweist, die mit der Verzahnung zum Einrücken zusammenwirkt, ist es möglich, auf den üblichen Drucknocken zum Einrücken zu verzichten. Dessen Funktion wird also von der Verzahnung selbst übernommen. Somit wird die Anzahl der Zähne nicht verringert. Ganz im Gegenteil ist es möglich, den verzahnten Bereich besonders groß auszubilden. Ferner kann der Abstand der Sperrklinke von der Rastlasche verringert werden, da keine über die Verzahnung hervorstehende Drucknase vorhanden bzw. notwendig ist.

Die Verzahnung kommt bei der Bewegung in der ausgerückten Stellung der Sperrklinke in Kontakt mit der Einrückfläche an der Sperrklinke und drückt diese in die eingerückte Stellung. In der eingerückten Stellung greift die Verzahnung lediglich in die. Rastzähne der Sperrklinke ein.

Nach einer Ausführungsform kann die Einrückfläche exzentrisch zur Drehachse der Sperrklinke ausgebildet sein. Die Einrückfläche kann ferner einerseits von mindestens einem Rastzahn und andererseits von einer Ausrücknase begrenzt werden.

Der "aktive" Bereich der eigentlichen Einrückfläche kann dabei an der der Verzahnung zugewandten Seite der Ausrücknase ausgebildet sein.

Die Feder des Rastbeschlags besitzt eine Doppelfunktion. Einerseits hält sie die Sperrklinke in eingerückter Position im Rasteingriff mit der Verzahnung. Andererseits hält sie die Sperrklinke in der ausgerückten Position fest.

Nach einer weiteren Ausführungsform des Rastbeschlags weist die Sperrklinke hierzu an der der Verzahnung abgewandten Seite eine Rastausnehmung auf, in die die Feder bei ausgerückter Stellung der Sperrklinke eingreift und diese festhält. Zusätzlich kann die Sperrklinke an der der Verzahnung abgewandten Seite eine Anlagefläche aufweisen, an die die Feder bei eingerückter Stellung der Sperrklinke anliegt.

Vorzugsweise sind die Rastausnehmung und die Anlagefläche benachbart angeordnet, so dass kleine Bewegungen der Klinke bereits zwischen der eingerückten und ausgerückten Position unterscheiden. Dies erlaubt wiederum eine Verkleinerung der Gesamtbaugröße. Dabei können die Rastausnehmung und die Anlagefläche von einer scharfen Kante getrennt sein, so dass sich ein "schnappendes" Umschalten ergibt.

Nach einer bevorzugten Ausführungsform weist die Rastausnehmung eine Fläche auf, die der Gestalt und Lage des vorderen Bereichs der Feder angepasst ist, so dass diese im ausgerückten Zustand der Sperrklinke etwa flächig an bzw. auf der Fläche liegt. Somit wird trotz einfacher Bauweise der Sperrklinke und der Feder ein gutes Festhalten der Sperrklinke durch die Feder erreicht.

Eine besonders einfache Befestigung ergibt sich, wenn die Feder klemmend an einer Abdeckung, z. B. für den Gelenkbereich des Rastbeschlags, gehalten ist.

Nach einer bevorzugten Ausführungsform ist die Sperrklinke sichelförmig ausgebildet. Dabei ist es von Vorteil, wenn die Drehachse der Sperrklinke asymmetrisch angeordnet ist, so dass eine günstige Hebelgeometrie erreicht wird.

Einen besonders kompakten und gleichzeitig einfachen Rastbeschlag mit hoher Haltekraft erhält man, wenn die Drehachse der Rastlasche, die Drehachse der Sperrklinke und die Längsmittellinien der beiden Laschen in der Ausgangsstellung des Rastbeschlags auf einer Linie liegen.

Weitere Merkmale, Einzelheiten und Vorteile der Erfindung ergeben sich aus der nachfolgenden Beschreibung eines Ausführungsbeispieles anhand der Zeichnung. Es zeigen:
- Fig. 1: eine Draufsicht auf einen erfindungsgemäßen Rastbeschlag in der eingerückten Endstellung, wobei die Abdeckung aufgeschnitten ist;
- Fig. 2: den Rastbeschlag aus Fig. 1 in der ausgerückten Endstellung und
- Fig. 3: den Rastbeschlag aus Fig. 1 in der Stellung beim Einrücken der Sperrklinke.

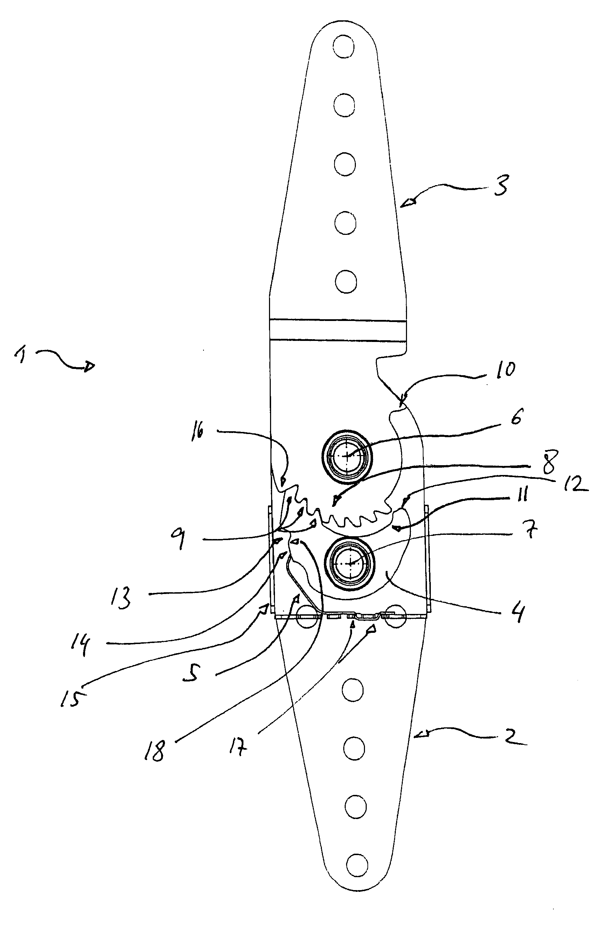

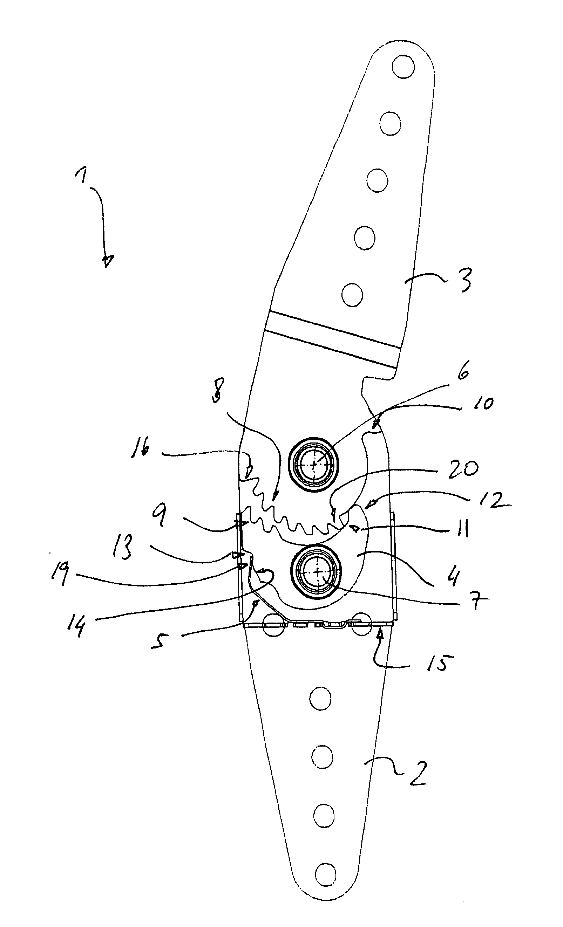

In den Figuren 1 bis 3 ist ein als Ganzes mit 1 bezeichneter Rastbeschlag in der Draufsicht in verschiedenen Stellungen dargestellt, wobei die Abdeckung aufgeschnitten ist und lediglich deren Seitenwände 15 angedeutet sind.

Der Rastbeschlag umfasst eine Anschlusslasche 2 zur Befestigung am feststehenden Teil eines Möbels und eine Rastlasche 3 zur Befestigung an dem verstellbaren Teil des Möbels.

Die Anschlusslasche 2 weist zwei in den Figuren nicht sichtbare Bohrungen auf, um zwei Nieten 6, 7 oder dergleichen aufzunehmen, um einerseits die Abdeckung zu befestigen und andererseits die jeweiligen Drehachsen 6, 7 der Rastlasche 3 und der Sperrklinke 4 auszubilden. Diese Nieten 6, 7 können mit geeigneten Hülsen usw. versehen werden, um die Drehachsen auszubilden.

Die Rastlasche 3 weist an ihrem einen Ende eine konzentrisch zu ihrer Drehachse 6 bzw. der Gelenkachse des Rastbeschlags 1 angeordnete Verzahnung 8 auf. Auf der einen Seite der Verzahnung 8 ist ein Anschlag 16 zur Begrenzung der Bewegung der Laschen gegeneinander vorgesehen. Liegt der äußere Zahn der Sperrklinke 4 an dem Anschlag 16 an (vgl. Fig. 1), so befindet sich der Rastbeschlag in der Ausgangsstellung. Auf der anderen Seite ist durch einen unverzahnten Bereich getrennt bzw. beabstandet ein Anschlagnocken 10 vorgesehen.

Die Sperrklinke 4 ist der Verzahnung 8 gegenüber angeordnet und weist eine etwa sichelförmige Gestalt auf, die exzentrisch an der Niete 7 als Drehachse gelagert ist. Auf der einen Seite und der Verzahnung 8 gegenüberliegend sind mehrere Rastzähne 9 angeordnet, die derart ausgestaltet sind, dass sie zusammen mit der Verzahnung 8 eine Selbsthemmung bewirken und die Rastfunktion ausüben. Auf der anderen Seite der Sperrklinke 4 ist durch einen unverzahnten Bereich getrennt bzw. beabstandet ein Ausrücknase 12 vorgesehen.

In der eingerückten Stellung der Sperrklinke 4 (vgl. Fig. 1) greifen jeweils drei Rastzähne 9 der Sperrklinke 4 in die gegenüberliegende Verzahnung 8 der Rastlasche 3 ein. Um dieses Ineinandergreifen aufrecht zu erhalten ist eine Feder 5 vorgesehen, die die Sperrklinke 4 in der eingerückten Position hält bzw. beaufschlagt. Dazu drückt die Feder 5 mit ihrer Spitze auf eine Anlagefläche 14 auf der Rückseite der Sperrklinke 4. Die Feder 5 ist eine Blattfeder und in entsprechenden Schlitzen 17 der Seitenwände 15 der Abdeckung klemmend festgelegt.

Die Drehachse 6 der Rastlasche 3, die Drehachse 7 der Sperrklinke 4 und die Längsmittellinien der beiden Laschen 2, 3 liegen in der in Figur 1 dargestellten Ausgangsposition auf einer Linie.

Zur Verstellung des Rastbeschlags 1 wird die Rastlasche 3 im Uhrzeigersinn gegenüber der Anschlusslasche 2 verdreht.

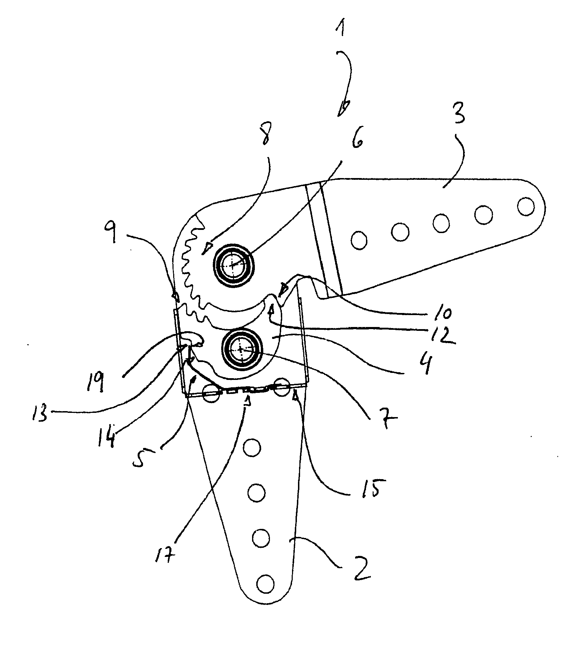

Wird die Rastlasche 3 soweit im Uhrzeigersinn gegenüber der Anschlusslasche 2 verdreht bis der Anschlagnocken 10 zur Anlage an der Ausrücknase 12 kommt und weiter bis er gegen diese drückt, dann wird die Sperrklinke 4 gegen die Federkraft der Feder 5 ausgerückt. Diese Stellung ist in Fig. 2 dargestellt.

Beim Ausrücken verändert sich die Position, an der die Feder 5 mit der Rückseite der Sperrklinke 4 kontaktiert. Um die die Sperrklinke 4 in der ausgerückten Position zu halten, rutscht die Feder 5 mit ihrer Spitze in eine Rastausnehmung 13 neben der Anlagefläche 14 auf der Rückseite der Sperrklinke. Der Übergang zwischen der Rastausnehmung 13 und der Anlagefläche 14 wird von einer scharfen Kante 18 gebildet, so dass mit dem Vorgang ein gewisses "Schnappen" einhergeht. Diese Kante 18 geht in eine etwa ebene Fläche 19 der Rastausnehmung 13 über, die der Gestalt und Lage des vorderen Bereichs der Feder 5 angepasst ist, so dass diese nicht allein mit ihrer Spitze an der Sperrklinke 4 anliegt, wie dies in eingerückten Zustand der Fall ist, sondern mit dem vorderen Bereich etwa flächig an bzw. auf der Fläche 19 liegt. Somit wird, ohne dass die Spitze der Feder 5 besonders bearbeitet oder aufwendig gebogen werden müsste, ein gutes Festhalten der Sperrklinke durch die Feder und die Doppelfunktion der Feder erreicht.

Um die Sperrklinke 4 wieder einzurücken, erfolgt eine Verdrehung der Rastlasche 3 zurück gegen den Uhrzeigersinn gegenüber der Anschlusslasche 2. Hierbei kommt die Verzahnung 8 bzw. deren ersten Zahn 20 mit der Einrückfläche 11 in Berührung. Die Einrückfläche 11 ist also einerseits von einem Rastzahn 9 und andererseits von der Ausrücknase 12 bzw. deren Rückseite begrenzt.

Der eigentlich "aktive" Bereich der Einrückfläche 11, der für das endgültige Einrücken verantwortlich ist, ist am Fuße der Rückseite der Ausrücknase 12 bzw. an der der Verzahnung 8 zugewandten Seite der Ausrücknase 12 ausgebildet. Diese Fläche erstreckt sich in Richtung der Verzahnung 8 gerade so weit, dass die Verzahnung 8 im Rastbetrieb an der Einrückfläche 11 bzw. Rückseite der Ausrücknase 12 ohne Kontakt vorbei bewegt wird, jedoch der erste Zahn 20 der Verzahnung 20 in der veränderten Stellung im ausgerückten Zustand der Sperrklinke 4 an ihr zur Anlage kommt. Die Einrückfläche 11 ist dabei exzentrisch zur Drehachse 7 der Sperrklinke 4 ausgebildet, so dass der Zahn 20 wie alle anderen Zähne ausgeformt ist und im Rastbetrieb genutzt werden kann.

### Bezugszeichenliste:

- 1: Rastbeschlag
- 2: Anschlusslasche
- 3: Rastlasche
- 4: Sperrklinke
- 5: Feder
- 6: Achse bzw. Niete
- 7: Achse bzw. Niete
- 8: Verzahnung
- 9: Rastzahn
- 10: Anschlagnocken
- 11: Einrückfläche
- 12: Ausrücknase
- 13: Rastausnehmung
- 14: Anlagefläche
- 15: Seitenwände der Abdeckung
- 16: Anschlag
- 17: Schlitze
- 18: Kante
- 19: Fläche
- 20: Zahn

## Patentansprüche

1. Rastbeschlag (1) eines verstellbaren Lehnen- oder Stützteiles eines Möbels, insbesondere eines Sitz- oder Liegemöbels, mit einer Anschlusslasche (2) und einer damit schwenkbar verbundenen, in verschiedenen Winkelstellungen arretierbaren Rastlasche (3), die eine konzentrisch zur Gelenkachse (6) angeordnete Verzahnung (8) aufweist, in die in Raststellung eine drehbar an der Anschlusslasche (2) gelagerte Sperrklinke (4) eingreift, wobei die Sperrklinke (4) in der ausgerückten Position durch eine Feder (5) gehalten und in der eingerückten Position von derselben Feder (5) beaufschlagt wird, **dadurch gekennzeichnet, dass** lediglich ein Anschlagnocken (10) an der Rastlasche (3) zum Ausrücken der Sperrklinke (4) durch Zusammenwirken mit einer Ausrücknase (12) vorgesehen ist und dass die Sperrklinke (4) eine Einrückfläche (11) aufweist, die mit der Verzahnung (8) zum Einrücken zusammenwirkt.

2. Rastbeschlag nach Anspruch 1, **dadurch gekennzeichnet, dass** der aktive Bereich der eigentlichen Einrückfläche (11) an der der Verzahnung (8) zugewandten Seite der Ausrücknase (12) ausgebildet ist.

3. Rastbeschlag nach Anspruch 1 oder 2, **dadurch gekennzeichnet, dass** die Einrückfläche (11) exzentrisch zur Drehachse (7) der Sperrklinke (4) ausgebildet ist.

4. Rastbeschlag nach einem der vorhergehenden Ansprüche, **dadurch gekennzeichnet, dass** die Einrückfläche (11) der Sperrklinke (4) einerseits von mindestens einem Rastzahn (9) und andererseits von der Ausrücknase (12) begrenzt wird.

5. Rastbeschlag nach einem der vorhergehenden Ansprüche, **dadurch gekennzeichnet, dass** die Sperrklinke (4) an der der Verzahnung (8) abgewandten Seite eine Rastausnehmung (13) aufweist, in die die Feder (5) bei ausgerückter Stellung der Sperrklinke (4) eingreift und diese festhält.

6. Rastbeschlag nach einem der vorhergehenden Ansprüche, **dadurch gekennzeichnet, dass** die Sperrklinke (4) an der der Verzahnung abgewandten Seite eine Anlagefläche (14) aufweist, an die die Feder (5) bei eingerückter Stellung der Sperrklinke (4) anliegt.

7. Rastbeschlag nach Anspruch 5 oder 6, **dadurch gekennzeichnet, dass** die Rastausnehmung (13) und die Anlagefläche (14) von einer scharfen Kante (18) getrennt sind.

8. Rastbeschlag nach einem der Ansprüche 5 bis 7, **dadurch gekennzeichnet, dass** die Rastausnehmung (13) eine Fläche (19) aufweist, die der Gestalt und Lage des vorderen Bereichs der Feder (5) angepasst ist, so dass diese im ausgerückten Zustand der Sperrklinke (4) etwa flächig an bzw. auf der Fläche (19) liegt.

9. Rastbeschlag nach einem der vorhergehenden Ansprüche, **dadurch gekennzeichnet, dass** die Sperrklinke (4) drei Rastzähne (9) aufweist.

10. Rastbeschlag nach einem der vorhergehenden Ansprüche, **dadurch gekennzeichnet, dass** die Sperrklinke sichelförmig ausgebildet ist.

11. Rastbeschlag nach einem der vorhergehenden Ansprüche, **dadurch gekennzeichnet, dass** die Feder (5) klemmend an einer Abdeckung (15) gehalten ist.

12. Rastbeschlag nach einem der vorhergehenden Ansprüche, **dadurch gekennzeichnet, dass** die Drehachse (6) der Rastlasche (3), die Drehachse (7) der Sperrklinke (4) und die Längsmittellinien der beiden Laschen (2, 3) in der Ausgangsposition auf einer Linie liegen.

## Claims

1. Latching fitting (1) for an adjustable backrest part or supporting part of an article of furniture and in particular of an article of furniture for sitting or reclining on, having a connecting arm (2) and a latching arm (3) which is pivotably connected thereto, which can be locked in various angular positions and which has a set of teeth (8) arranged concentrically to the shaft for pivoting (6), with which set of teeth (8) a locking pawl (4) which is rotatably mounted on the connecting arm (2) engages in the latched position, the locking pawl (4) being held in the disengaged position by a spring (5) and having pressure applied to it by the same spring (5) in the engaged position, **characterised in that** there is provided on the latching arm (3) simply an abutment lug (10) to disengage the locking pawl (4) by co-operating with a disengaging nose (12) and **in that** the locking pawl (4) has an engaging surface (11) which co-operates with the set of teeth (8) to cause engagement.

2. Latching fitting according to claim 1, **characterised in that** the active region of the engaging surface (11) proper is formed on the side of the disengaging nose (12) which is adjacent the set of teeth (8).

3. Latching fitting according to claim 1 or 2, **characterised in that** the engaging surface (11) is formed eccentrically to the axis of rotation (7) of the locking pawl (4)

4. Latching fitting according to one of the preceding claims, **characterised in that** the engaging surface (11) of the locking pawl (4) is bounded on the one hand by at least one latching tooth (9) and on the other hand by the disengaging nose (12).

5. Latching fitting according to one of the preceding claims, **characterised in that**, on the side remote from the set of teeth (8), the locking pawl (4) has a recess for latching (13) in which the spring (5) engages and restrains the locking pawl (4) when the latter is in the disengaged position.

6. Latching fitting according to one of the preceding claims, **characterised in that**, on the side remote from the set of teeth (8), the locking pawl (4) has a supporting surface (14) against which the spring (4) rests when the locking pawl (4) is in the engaged position.

7. Latching fitting according to claim 5 or 6, **characterised in that** the recess for latching (13) and the supporting surface (14) are separated by a sharp edge (18).

8. Latching fitting according to one of claims 5 to 7, **characterised in that** the recess for latching (13) has a surface (19) which is adapted to the form and position of the front region of the spring (5), and the latter thus rests against or on the surface (19) approximately over an area when the locking pawl (4) is in the disengaged position.

9. Latching fitting according to one of the preceding claims, **characterised in that** the locking pawl (4) has three latching teeth (9).

10. Latching fitting according to one of the preceding claims, **characterised in that** the locking pawl of a sickle-shaped form.

11. Latching fitting according to one of the preceding claims, **characterised in that** the spring (5) is held on a cover (15) in clamping engagement.

12. Latching fitting according to one of the preceding claims, **characterised in that** the axis of rotation (6) of the latching arm (3), the axis of rotation (7) of the locking pawl (4) and the longitudinal centrelines of the two arms (2, 3) lie on a single line in the starting position.

## Revendications

1. Ferrure à enclenchement d'une pièce de dossier ou d'assise réglable d'un meuble, notamment d'un meuble destiné à s'assoir ou s'allonger, ladite ferrure à enclenchement comportant une attache de raccordement (2) et une attache à enclenchement (3) qui est reliée de façon à pouvoir pivoter à ladite attache de raccordement, qui peut être bloquée dans différentes positions angulaires et qui comporte une denture (8) qui est disposée concentriquement à l'axe d'articulation (6) et dans laquelle un cliquet de blocage (4) monté à rotation sur l'attache de raccordement (2) s'engage dans une position d'enclenchement, le cliquet de blocage (4) étant maintenu dans la position de désengagement par un ressort (5) et étant poussé dans la position d'engagement par le même ressort (5), **caractérisé en ce qu'**une seule came de butée (10) est prévue au niveau de l'attache à enclenchement (3) pour désengager le cliquet de blocage (4) par coopération avec un ergot de désengagement (12) et **en ce que** le cliquet de blocage (4) présente une surface d'engagement (11) qui coopère avec la denture (8) pour réaliser l'engagement.

2. Ferrure à enclenchement selon la revendication 1, **caractérisée en ce que** la région active de la surface d'engagement proprement dite (11) est conformée du côté de l'ergot de désengagement (12) qui est dirigé vers la denture (8).

3. Ferrure à enclenchement selon la revendication 1 ou 2, **caractérisée en ce que** la surface d'engagement (11) est conformée de façon excentrique par rapport à l'axe de rotation (7) du cliquet de blocage (4).

4. Ferrure à enclenchement selon l'une des revendications précédentes, **caractérisée en ce que** la surface d'engagement (11) du cliquet de blocage (4) est limitée d'une part par au moins une dent d'enclenchement (9) et d'autre part par l'ergot de désengagement (12).

5. Ferrure à enclenchement selon l'une des revendications précédentes, **caractérisée en ce que** le cliquet de blocage (4) comporte du côté opposé à la denture (8) une cavité d'enclenchement (13) dans laquelle, lorsque le cliquet de blocage (4) est dans la position de désengagement, le ressort (5) s'engage et immobilise celui-ci.

6. Ferrure à enclenchement selon l'une des revendications précédentes, **caractérisée en ce que** le cliquet de blocage (4) présente du côté opposé à la denture une surface d'appui (14) sur laquelle le ressort (5) appuie lorsque le cliquet de blocage (4) est dans la position d'engagement.

7. Ferrure à enclenchement selon la revendication 5 ou 6, **caractérisée en ce que** la cavité d'enclenchement (13) et la surface d'appui (14) sont séparées par un bord effilé (18).

8. Ferrure à enclenchement selon l'une des revendications 5 à 7, **caractérisée en ce que** la cavité d'enclenchement (13) présente une surface (19) qui est adaptée à la forme et à la position de la région avant du ressort (5) de sorte que celui-ci repose à peu près à plat contre ou sur la surface (19) lorsque le cliquet de blocage (4) est dans l'état de désengagement.

9. Ferrure à enclenchement selon l'une des revendications précédentes, **caractérisée en ce que** le cliquet de blocage (4) comporte trois dents d'enclenchement (9).

10. Ferrure à enclenchement selon l'une des revendications précédentes, **caractérisée en ce que** le cliquet de blocage a la forme d'un croissant.

11. Ferrure à enclenchement selon l'une des revendications précédentes, **caractérisée en ce que** le ressort (5) est maintenu bloqué contre un capot (15).

12. Ferrure à enclenchement selon l'une des revendications précédentes, **caractérisée en ce que** l'axe de rotation (6) de l'attache à enclenchement (3), l'axe de rotation (7) du cliquet de blocage (4) et les axes centraux longitudinaux des deux attaches (2, 3) sont situés sur une ligne dans la position de départ.
